# EUROPÄISCHE PATENTSCHRIFT

(11) **EP 4 526 987 B1**
(45) Veröffentlichungstag und Bekanntmachung des Hinweises auf die Patenterteilung: **17.06.2026**
(21) Anmeldenummer: 23726101.1
(22) Anmeldetag: 11.05.2023
(51) Int. Cl.: H02K 15/04

(54) **VERFAHREN ZUR HERSTELLUNG EINER WICKELMATTE FÜR EINEN STATOR ODER EINEN ROTOR EINES ELEKTRISCHEN MOTORS**
METHOD FOR PRODUCING A WINDING MAT FOR A STATOR OR A ROTOR OF AN ELECTRIC MOTOR
PROCÉDÉ DE PRODUCTION D'UN VOILE D'ENROULEMENT POUR UN STATOR OU UN ROTOR D'UN MOTEUR ÉLECTRIQUE

(30) Priorität: 17.05.2022 DE 102022204826
(43) Veröffentlichungstag der Anmeldung: 26.03.2025
(73) Patentinhaber: ZF Friedrichshafen AG, 88046 Friedrichshafen (DE)
(72) Erfinder: EBERT, Matthias, 97267 Himmelstadt (DE); SCHNEIDER, Ralf, 97440 Werneck (DE)
(74) Vertreter: Tergau & Walkenhorst Intellectual Property GmbH
(86) Internationale Anmeldenummer: PCT/EP2023/062587
(87) Internationale Veröffentlichungsnummer: WO 2023/222501

(56) Entgegenhaltungen:
- EP-A2- 1 639 687
- DE-A1- 102019 220 415
- FR-A1- 2 968 858
- US-A1- 2010 064 505
- US-B2- 8 082 770
- US-B2- 8 230 578

## Beschreibung

Die Bedeutung von Elektromotoren hat im Zuge der Energie- und Verkehrswende stark zugenommen, da der Bedarf nach Antrieben, die ohne fossile Brennstoffe auskommen, ansteigt. Ein herkömmlicher Elektromotor besteht aus einem Stator und einem Rotor. Wenn Strom durch die um den Rotor gewickelten Leiter fließt, bildet sich ein Nord- und ein Südpol aus und der Rotor beginnt sich aufgrund des äußeren Magnetfelds des Stators zu drehen. Die Art des Wickelns für Stator und Rotor spielt dabei für die Effizienz des Elektromotors eine wesentliche Rolle.

Beim Wickeln der Leiter zu einer Wickelmatte, die um oder an dem Stator oder dem Rotor befestigt wird, werden die Leiter mechanisch beansprucht. Um einen hohen Wirkungsgrad, eine hohe Laufruhe, einen niedrigen Geräuschpegel und eine hohe Robustheit des Elektromotors gewährleisten zu können, muss der Wickelprozess reproduzierbar sein und die Leiter möglichst wenig mechanisch beanspruchen. Zudem ist eine hohe Beanspruchung des Leitermaterials während des Wickelns auch insofern nachteilig, als dass dadurch ein erhöhter Materialaufwand bei der Produktion entsteht.

Es gibt unterschiedliche Verfahren zur Herstellung einer Wickelmatte für einen Stator oder einen Rotor. In der Regel werden ein oder mehrere Wickeldrähte oder Leiter, diese können beispielsweise Runddrähte oder Flachdrähte sein, über eine Zuführeinrichtung einem Wickelschwert oder einem Steckbrett zugeführt und auf diesem aufgewickelt.

Das Wickeln um ein Steckbrett ist in der WO 2019/130232 A1 offenbart. Dazu werden Leiter und ein Steckbrett bereitgestellt. Letzteres weist Schlitze für die Aufnahme der Leiter auf. Das Bereitstellen der Leiter erfolgt mittels einer oder mehrerer Drahtführungseinrichtungen. Die Leiter werden in die Schlitze des Steckbretts eingeführt, sodass Teile der Leiter innerhalb der Schlitze liegen und andere Teile der Leiter über die Schlitze hinaus ragen. Aus den über die über die Schlitze hinaus ragenden Teilen der Leiter werden jeweils Verbindungen (Wickelköpfe) zu den im nächstliegenden Schlitz anzubringenden Teilen (Stegen) der Leiter geformt.

In der DE 10 2004 035 084 A1 wird ein Wickelverfahren für das mehrfache Wickeln um ein Wickelschwert beschrieben. Für das Wickelverfahren wird eine Schablone benötigt, auf der aus n parallelen Drähten Stege, die sich auf der Schablone befinden, und Wickelköpfe, die über die Schablone hinausragen, in einem ersten Arbeitsschritt erzeugt werden. Die Wickelköpfe werden vorzugsweise V- bzw. giebelförmig durch an der Schablone angebrachte Formkörper erzeugt. Nach dem Erzeugen der Stege und der Wickelköpfe werden diese in einem zweiten Arbeitsschritt um das n-fache des Zwischenabstandes entlang einer Drehachse der Schablone verschoben. Die ersten beiden Arbeitsschritte werden solange wiederholt, bis eine Anzahl an Wicklungen erzeugt worden ist, die einer Anzahl von Rotor- oder Statornuten entspricht.

Ein weiteres Wickelverfahren mit einem Wickelschwert wird in der US 7 281 312 B2 beschrieben. Das Verfahren ist den vorher beschriebenen Verfahren ähnlich, umfasst jedoch zusätzlich den Transfer der erzeugten Wickelmatte in ein Transfertool, einen Rotor oder einen Stator.

Ein wesentliches Problem der bereits beschriebenen Verfahren ist, dass Anpassungen bei der Dimensionierung und dem (Ab-)Transport, vor allem bei größeren Längen der Wickelmatte, nicht oder nur mit erheblichem Aufwand möglich sind, da die Länge des Steckbretts oder des Wickelschwerts im Wesentlichen der Länge der herzustellenden Wickelmatte entspricht.

Auch in der EP 3 182 568 B2 wird ein Verfahren zur Herstellung einer Wickelmatte mit einem Wickelschwert beschrieben. Bei dem beschriebenen Verfahren werden einzelne oder mehrere Drähte um ein Wickelschwert mehrfach gewickelt. Dazu können Haltemittel vorhanden sein, die während des Wickelns einen Abschnitt der Drähte festhalten, während ein anderer Abschnitt der Drähte relativ dazu bewegt wird. Das Wickeln erfolgt jedoch nicht solange, bis eine Anzahl an Wicklungen erreicht ist, die der Anzahl von Rotor- oder Statornuten entspricht, sondern die gewickelten Drähte werden über eine sich mit einer Wickeleinrichtung drehenden Transporteinrichtung, die als Bandförderer oder Zahnriemenförderer ausgebildet ist, direkt nach dem Wickeln abtransportiert. Das hat den Vorteil, dass die Länge der herzustellenden Wickelmatte flexibel an einen Stator oder einen Rotor angepasst werden kann.

Bei den beschriebenen Wickelverfahren werden die Leiter von dem Wickelschwert oder Steckbrett nach dem Wickeln abgestreift und anschließend flach zusammengedrückt. Das Zusammendrücken der Wickelmatte bzw. der Leiter beansprucht die Isolierung der Leiter sehr stark. Bei der Nutzung eines rotierenden Steckbretts oder Wickelschwerts ist zudem eine Schrittweitenänderung nur eingeschränkt möglich. Dies hat zur Folge, dass die parallel gewickelten Leiter untereinander asymmetrisch werden und sich Kreisströme ausbilden können. Diese führen beim Betrieb zu Verlusten in den Leitern und tragen nicht zur Drehmomentbildung bei.

Die Aufgabe der Erfindung ist es, ein Wickelverfahren zur Herstellung einer Wickelmatte für einen Stator oder einen Rotor eines elektrischen Motors bereitzustellen, das ohne die Verwendung eines Wickelschwerts, eine geringere mechanische Belastung der Leiter verursacht und eine höhere Gestaltungsflexibilität für die Wickelmatte zulässt.

Die Aufgabe wird erfindungsgemäß durch ein Verfahren zur Herstellung einer Wicklung für einen Stator oder einen Rotor eines elektrischen Motors, bei dem zwei Leiterstränge mit jeweils mindestens einem Leiter bereitgestellt und jeweils zu einer Aufnahmevorrichtungen entlang einer x-Richtung eines kartesischen Koordinatensystems zugeführt werden, gegenüberliegend angeordnete Wickelköpfe geformt werden, wobei die Leiterstränge jeweils mit einem ersten formgebenden Werkzeug, mit einer giebelförmigen Aussparung, einem zweiten formgebenden Werkzeug, mit einer giebelförmigen Auskragung, einen Giebel bildend zugestellt werden, womit sie in einer x-z- Ebene gebogen werden und in beide Giebel mit entgegengesetztem Richtungssinn in einer y-Richtung jeweils ein Lagensprung geprägt wird, senkrecht zur x-Richtung in der x-z-Ebene verlaufenden Stege für jeden Leiterstrang geformt werden, wobei die Stege durch das Verbinden der Aufnahmevorrichtungen mit ersten Achsen und das gegenläufige Aufeinanderzubewegen der ersten Achsen mit entgegengesetzten Richtungssinn in einer z-Richtung, das Übergeben der Leiterstränge an zweite Achsen und das gegenläufige Voneinanderwegbewegen der zweiten Achsen mit entgegengesetztem Richtungssinn in der z-Richtung, gebogen werden, die Aufnahmevorrichtungen von gelöst werden und die Leiterstränge um je einen Fördertakt in x-Richtung transportiert werden und wiederholen des Zuführens, des Formens der Wickelköpfe, des Formens der Stege, des Lösens der Aufnahmevorrichtung und des Transports der Leiterstränge, bis eine Wickelmatte mit einer definierten Anzahl an Wicklungen, die jeweils zwei Wickelköpfe und vier Stege umfassen, erzeugt worden ist, gelöst.

Zur Schonung des Leitermaterials ist es sinnvoll auf ein Steckbrett bzw. ein Wickelschwert zu verzichten. Das hat den Vorteil, dass Wickelmatten in nahezu beliebiger Länge und Form, bei vergleichsweise geringer Mattenbreite und Mattenhöhe hergestellt sowie flexibel Leiter während des Verfahrens ein- und ausgeschleust werden können.

Es ist von Vorteil, wenn der Lagensprung während des Biegens der Leiterstränge in der x-z-Ebene in die die Giebel bildenden Abschnitte der Leiterstränge geprägt wird. Dadurch kann das Verfahren beschleunigt werden.

Zum Prägen des Lagensprungs können zusätzliche Prägevorrichtungen verwendet werden oder das Prägen kann mit entsprechend ausgeführten ersten formgebenden Werkzeugen 3 und zweiten formgebenden Werkzeugen 4 durchgeführt werden.

Beim Formen der Stege kann vorteilhaft jedem Leiterstrang jeweils ein drittes formgebendes Werkzeug zugestellt werden und die können zum Formen der Stege um die dritten formgebenden Werkzeuge gebogen werden.

Während des Verfahrens können die ersten formgebenden Werkzeuge und die zweiten formgebenden Werkzeuge je nach Anforderung an die Wickelmatte ausgewechselt werden, um eine Schrittweite der Wicklungen innerhalb der erzeugten Wickelmatte zu variieren.

Es ist von Vorteil, wenn die Wicklungen zu einem Wickeltisch transferiert werden, der während des gesamten Verfahrens eine Taumelbewegung um die z-Achse ausführt, um die Lagensprünge in die Giebel der Wickelköpfe zu prägen.

Die Erfindung soll nachfolgend durch Ausführungsbeispiele anhand von Zeichnungen näher beschrieben werden. Hierzu zeigen:
- Fig. 1: Eine Ansicht einer Vorrichtung zur Durchführung des Verfahrens,
- Fig. 2a-h: jeweils einzelne Verfahrensschritte zur Herstellung einer Wickelmatte in einer Draufsicht,
- Fig. 3: mehrere Wicklungen einer Wickelmatte mit unterschiedlichen Schrittweiten in einer Draufsicht,
- Fig. 4: eine Ansicht von ersten und zweiten formgebenden Werkzeugen mit einem Leiterstrang zur Formung der Wickelköpfe,
- Fig. 5: eine Ansicht eines Leiterstrangs, einer Aufnahmevorrichtung und einer ersten Achse und
- Fig. 6a-b: eine Detailansicht des Prägens der Wickelköpfe.

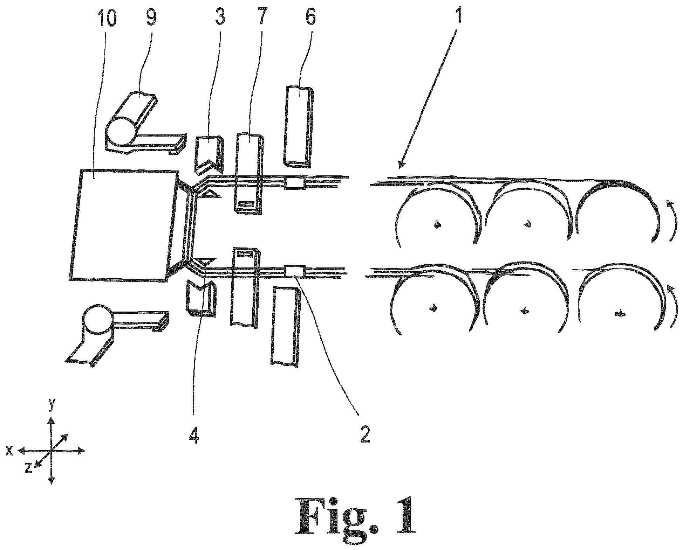

Eine Ansicht einer Vorrichtung zur Durchführung des Verfahrens ist in Fig. 1 dargestellt. Zwei Leiterstränge 1 werden entlang der x-Richtung eines kartesischen Koordinatensystems jeweils zu einer von zwei Aufnahmevorrichtungen 2 zugeführt, in denen die Leiterstränge 1 fixiert werden. Die Leiterstränge 1 enthalten jeweils mindestens einen Leiter und die Aufnahmevorrichtungen 2 nehmen jeweils alle Leiter eines Leiterstrangs 1 auf. Die zwei ersten Achsen 6 und die zwei zweiten Achsen 7 sind in der z-Richtung im entgegengesetzten Richtungssinn verfahrbar und jeweils mit den Aufnahmevorrichtungen 2 verbindbar. In der in Fig. 1 dargestellten Ausführung sind die ersten Achsen 6 oberhalb der Leiterstränge 1 und die zweiten Achsen 7 unterhalb der Leiterstränge 1 angeordnet. Zwei erste formgebende Werkzeuge 3 sind in der z-Richtung im entgegengesetzten Richtungssinn verfahrbar angeordnet und zweite formgebenden Werkzeuge 4 sind statisch angeordnet. Vorteilhaft vorhandene dritte formgebende Werkzeuge 9 sind entlang aller Achsen des kartesischen Koordinatensystems verstellbar ausgeführt.

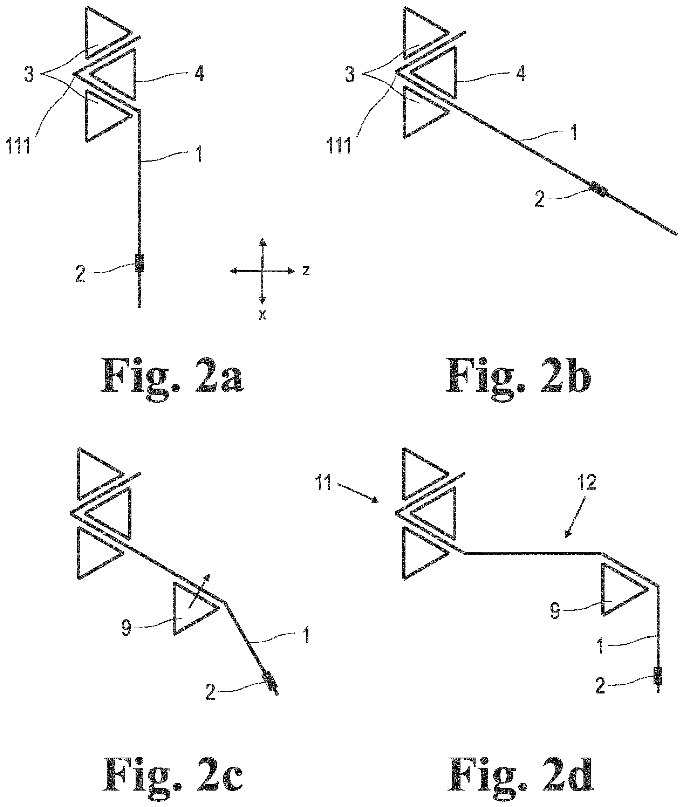

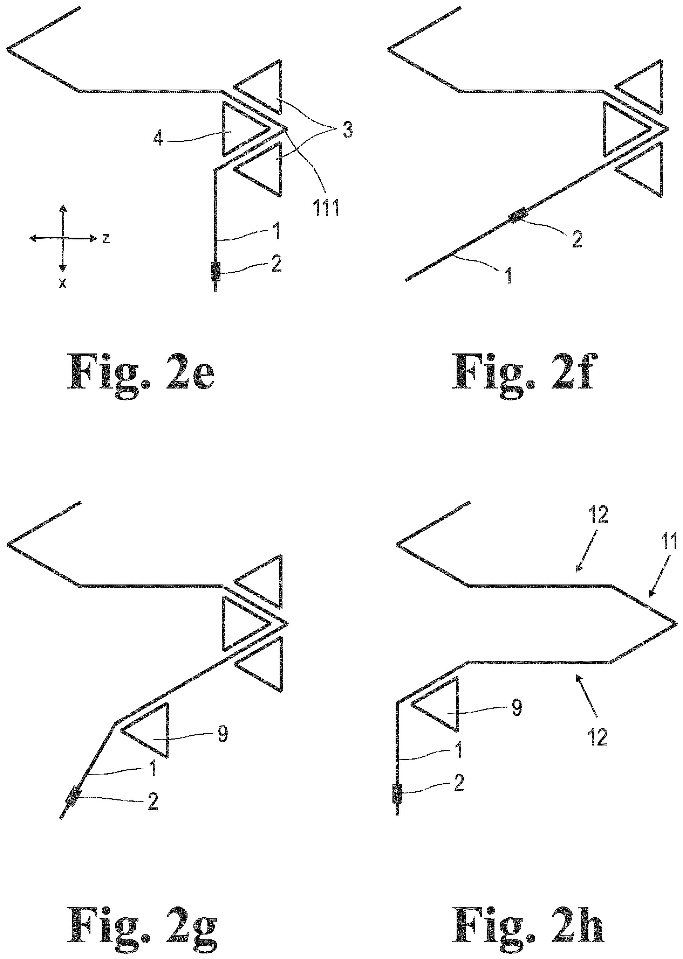

Das Wickelverfahren ist für einen Leiterstrang 1 in den Fig. 2a-h dargestellt. Der andere Leiterstrang 1 wird zeitgleich analog gewickelt, mit gegenüberliegend angeordneten Wickelköpfen 11. Um den Wickelkopf 11 zu formen wird der Leiterstrang 1, der beispielhaft durch einen Leiter dargestellt ist, jeweils mit einem ersten formgebenden Werkzeug 3, das über eine giebelförmige Aussparung verfügt, einem zweiten formgebenden Werkzeug 4, das über eine giebelförmige Auskragung verfügt zugestellt, womit der Leiterstrang 1 in einer x-z- Ebene gebogen, wird, einen Giebel 111 bildend. Darauf folgend oder gleichzeitig wird ein Lagensprung 5 in den Giebel 111 des Wickelkopfs 11 geprägt. In Fig. 2a ist der Wickelkopf 11 bereits geformt und die Aufnahmevorrichtung 2 hat den Leiterstrang 1 aufgenommen. Die Fig. 2b-d zeigen das Formen eines Stegs 12. Die Aufnahmevorrichtung 2 wird mit der ersten Achse 6 (nicht dargestellt) verbunden und die erste Achse 6 in z-Richtung verfahren, wodurch der Leiterstrang 1 in der x-z-Ebene verbogen wird. Die Aufnahmevorrichtung 2 mit dem Leiterstrang 1 wird anschließend an eine zweite Achse 7 (ebenfalls nicht dargestellt) übergeben und ein drittes formgebendes Werkzeug 9 wird an den Leiterstrang 1 zugestellt. Die zweite Achse 7 wird ebenfalls in der z-Richtung verfahren, wodurch der Leiterstrang 1 weiter in der x-z-Ebene verbogen, der Steg 12 geformt und der Leiterstrang 1 um das dritte formgebende Werkzeug 9 gebogen wird.

Anschließend wird die Aufnahmevorrichtung 2 gelöst und der Leiterstrang 1 um einen Fördertakt in x-Richtung bewegt. Vorteilhaft entspricht der Fördertakt einer Schrittweite SW der einzelnen Wicklungen. Der Leiterstrang 1 wird nun von der anderen Aufnahmevorrichtung 2 aufgenommen und es wird erneut ein Wickelkopf 11 geformt, wie in Fig. 2e gezeigt. Fig. 2f-2h zeigen analog zu Fig. 2b-d das Formen eines zweiten Stegs 12.

Die beschriebenen Verfahrensschritte werden solange wiederholt, bis eine Wickelmatte 8 mit einer definierten Anzahl an Wicklungen, die jeweils zwei Wickelköpfe 11 und vier Stege 12 umfassen, erzeugt worden ist. Die Stege 12 werden jeweils, abgesehen von den jeweils ersten und letzten Stegen 12 der Wickelmatte 8, zwei Wicklungen zugeordnet.

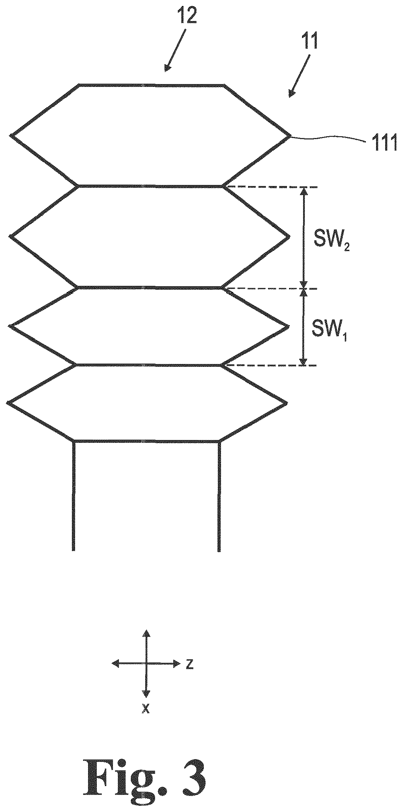

Fig. 3 zeigt insgesamt vier Wicklungen, die jeweils aus zwei gegenüberliegenden Wickelköpfen 11 und vier Stegen 12 bestehen, wobei jeweils zwei Stege 12 übereinanderliegen. Die erste Schrittweite SW₁ der unteren beiden Wicklungen unterscheidet sich von der zweiten Schrittweite SW₂ der oberen beiden Wicklungen. Die Schrittweite SW ist der Abstand der beiden Stege 12 einer Wicklung zueinander. Die Schrittweite SW hängt, wie auch die Form der Giebel 111, von den im Wickelverfahren verwendeten ersten formgebenden Werkzeugen 3 und zweiten formgebenden Werkzeugen 4 ab. Diese können im Laufe des Verfahrens ausgetauscht werden, wodurch die hergestellte Wickelmatte 8 Wicklungen mit unterschiedlichen Schrittweiten SW aufweisen kann.

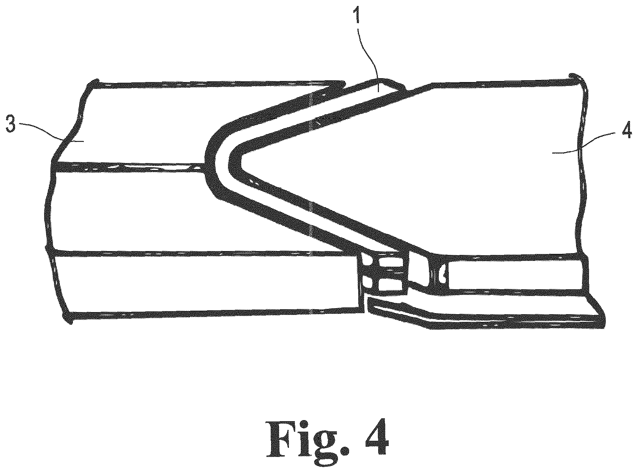

Das Formen des Wickelkopfs 11 ist in Fig. 4 im Detail gezeigt. Das erste formgebende Werkzeug 3 ist beweglich, führt den dargestellten Leiterstrang 1 dem ortsfesten zweiten formgebenden Werkzeug 4 zu und drückt den Leiterstrang 1 an das zweite formgebende Werkzeug 4 an. Dadurch wird der giebelförmige Wickelkopf 11 ausgebildet.

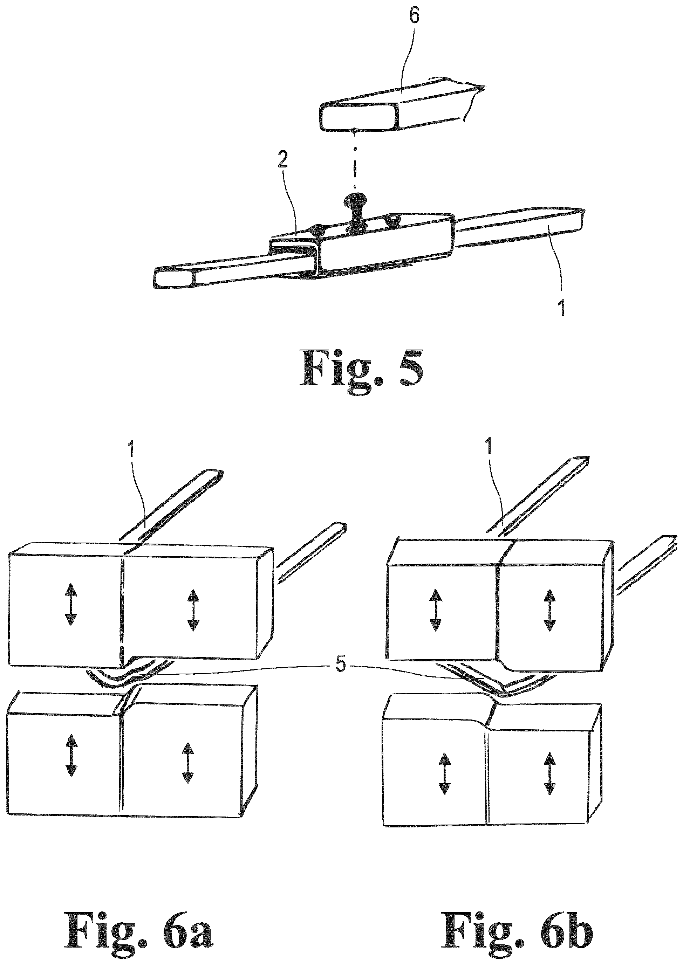

Fig. 5 zeigt beispielhaft das Verbinden der Aufnahmevorrichtung 2, die einen der Leiterstränge 1 aufgenommen hat, mit der ersten Achse 6. Dazu können zusätzliche Verbindungsmittel an der Aufnahmevorrichtung 2 und/oder an der ersten Achse 6 vorhanden sein. Analog zur ersten Achse 6 kann die Aufnahmevorrichtung 2 auch mit der zweiten Achse 7 verbunden werden. Ob die Achsen ober- oder unterhalb der Aufnahmevorrichtung 2 angeordnet sind ist dabei nicht erfindungswesentlich.

In Fig. 6a und Fig. 6b ist das Prägen eines Lagensprungs 5 in je einen Wickelkopf 11 im Detail gezeigt. Für das Prägen des Lagensprungs 5 können zusätzliche Prägevorrichtungen verwendet werden oder das Prägen wird mit entsprechend ausgeführten ersten formgebenden Werkzeugen 3 und zweiten formgebenden Werkzeugen 4 durchgeführt. Der Lagensprung 5 beschreibt einen Sprung des Leiterstrangs 1 in eine andere Lage. Jeder gewickelte Leiterstrang liegt in zwei Lagen. Das Prägen kann vorteilhaft dafür sorgen, dass zusätzlich die Dicke des Leiterstrangs 1 oder einzelner Leiter des Leiterstrangs 1 abnimmt. Durch das Prägen ist es möglich, mehrere Leiterstränge 1 bzw. Wicklungen miteinander zu der Wickelmatte 8 zu verflechten.

### Bezugszeichen

- 1: Leiterstränge
- 2: Aufnahmevorrichtung
- 3: erstes formgebendes Werkzeug
- 4: zweites formgebendes Werkzeug
- 5: Lagensprung
- 6: erste Achsen
- 7: zweite Achsen
- 8: Wickelmatte
- 9: drittes formgebendes Werkzeug
- 10: Wickeltisch
- 11: Wickelköpfe
- 12: Stege
- 111: Giebel

- SW: Schrittweite
- SW₁: erste Schrittweite
- SW₂: zweite Schrittweite

### Ergänzungsseite 3*

Dokument US 2010/064505 A1 offenbart ein *Verfahren zur Herstellung eines Stators für dynamoelektrische Maschinen;*
Dokument EP 1 639 687 A2 offenbart ein *Verfahren und Vorrichtung zum Formen von Wellenwicklungen für Rotor- und Statorblechpakete elektrischer Maschinen;*
Dokument FR 2 968 858 A1 offenbart *Rotor oder Stator, z. B. für einen Generator eines Kraftfahrzeugs, mit durchgehenden elektrischen Drähten, die in jede der Nuten eingeführt sind und mit einem Satz Wicklungswindungen versehen sind, der höher ist als ein anderer Satz Wicklungswindungen und einen Umfangspfad bildet;*
Dokument DE 10 2019 220415 A1 offenbart *Vorrichtung und Verfahren zum Biegen elektrisch leitfähiger Profilstäbe für Elektromotoren (Haarnadeln);*
Dokument US 8 230 578 B2 offenbart ein *Verfahren zur Herstellung einer Wicklung einer elektrischen Maschine; und*
Dokument US 8 082 770 B2 offenbart *Vorrichtung und Verfahren zum Formen von Drahtschlaufen für eine elektrische Maschine.*

## Patentansprüche

1. Verfahren zur Herstellung einer Wickelmatte für einen Stator oder einen Rotor eines elektrischen Motors, umfassend die folgenden Schritte:
A. Bereitstellen von zwei Leitersträngen (1) mit jeweils mindestens einem Leiter,
B. Zuführen der Leiterstränge (1) jeweils zu einer Aufnahmevorrichtung (2) entlang einer x-Richtung eines kartesischen Koordinatensystems,
C. Formen von gegenüberliegend angeordneten Wickelköpfen (11), wobei die Leiterstränge (1) jeweils mit einem ersten formgebenden Werkzeug (3), mit einer giebelförmigen Aussparung, einem zweiten formgebenden Werkzeug (4), mit einer giebelförmigen Auskragung zugestellt werden, womit sie in einer x-z- Ebene gebogen werden, einen Giebel (111) bildend und in beide Giebel (111) mit entgegengesetztem Richtungssinn in einer y-Richtung jeweils ein Lagensprung (5) geprägt wird,
D. Formen von senkrecht zur x-Richtung in der x-z-Ebene verlaufenden Stegen (12) für jeden Leiterstrang (1), wobei die Stege (12) durch das Verbinden der Aufnahmevorrichtungen (2) mit ersten Achsen (6) und das gegenläufige Aufeinanderzubewegen der ersten Achsen (6) mit entgegengesetzten Richtungssinn in einer z-Richtung, das Übergeben der Leiterstränge (1) an zweite Achsen (7) und das gegenläufige Voneinanderwegbewegen der zweiten Achsen (7) mit entgegengesetztem Richtungssinn in der z-Richtung, gebogen werden,
E. Lösen der Aufnahmevorrichtung (2) von den Leitersträngen (1) und Transport der Leiterstränge (1) um je einen Fördertakt in x-Richtung, und
F. Wiederholen der Schritte B bis E, bis eine Wickelmatte (8) mit einer definierten Anzahl an Wicklungen, die jeweils durch beide Leiterstränge gebildet werden und jeweils zwei Wickelköpfe (11) und vier Stege (12) umfassen, erzeugt worden ist.

2. Verfahren nach Anspruch 1, **dadurch gekennzeichnet,**
**dass** in Schritt C der Lagensprung (5) während des Biegens der Leiterstränge (1) in der x-z-Ebene in die Giebel (111)) geprägt wird.

3. Verfahren nach Anspruch 1 oder 2, **dadurch gekennzeichnet,**
**dass** in Schritt D den Leitersträngen (1) jeweils ein drittes formgebendes Werkzeug (9) zugestellt wird und die Leiterstränge (1) um die dritten formgebenden Werkzeuge (9) gebogen werden.

4. Verfahren nach einem der vorhergehenden Ansprüche, **dadurch gekennzeichnet, dass** während des Verfahrens die ersten formgebenden Werkzeuge (3) und die zweiten formgebenden Werkzeuge (4) ausgewechselt werden, um eine Schrittweite (SW) der Wicklungen zu variieren.

5. Verfahren nach einem der vorhergehenden Ansprüche, **dadurch gekennzeichnet, dass** die Wicklungen zu einem Wickeltisch (10) transferiert werden, der während des gesamten Verfahrens eine Taumelbewegung um die z-Achse ausführt, um die Lagensprünge (5) in die Giebel (111) der Wickelköpfe (11) zu prägen.

## Claims

1. A method for producing a winding mat for a stator or a rotor of an electric motor, comprising the following steps:
A. providing two conductor strands (1) each having at least one conductor,
B. feeding the conductor strands (1) in each case to a receiving device (2) along an x-direction of a Cartesian coordinate system,
C. forming oppositely arranged winding heads (11), wherein the conductor strands (1) are each advanced towards a first forming tool (3) having a gable-shaped recess and towards a second forming tool (4) having a gable-shaped projection, as a result of which they are bent in an x-z plane to form a gable (111), and wherein, in each of the gables (111) a layer offset (5) is formed in a y-direction with opposite directions of orientation,
D. forming webs (12) extending in the x-z plane perpendicular to the x-direction for each conductor strand (1), wherein the webs (12) are bent by connecting the receiving devices (2) to first axes (6) and moving the first axes (6) towards one another in opposite directions in a z-direction, transferring the conductor strands (1) to second axes (7), and moving the second axes (7) away from one another in opposite directions in the z-direction,
E. releasing the receiving devices (2) from the conductor strands (1) and transporting the conductor strands (1) by one feed increment in each case in the x-direction, and
F. repeating steps B to E until a winding mat (8) having a defined number of windings has been produced, the windings each being formed by both conductor strands and each comprising two winding heads (11) and four webs (12).

2. The method according to claim 1, **characterized in that** in step C the layer offset (5) is formed into the gables (111) during the bending of the conductor strands (1) in the x-z plane.

3. The method according to claim 1 or 2, **characterized in that** in step D a third forming tool (9) is advanced towards each of the conductor strands (1) and the conductor strands (1) are bent around the third forming tools (9).

4. The method according to any one of the preceding claims, **characterized in that** during the method the first forming tools (3) and the second forming tools (4) are exchanged, in order to vary a pitch (SW) of the windings.

5. The method according to any one of the preceding claims, **characterized in that** the windings are transferred to a winding table (10) which performs a tumbling movement about the z-axis during the entire method, in order to form the layer offsets (5) into the gables (111) of the winding heads (11).

## Revendications

1. Procédé de production d'un voile d'enroulement pour un stator ou un rotor d'un moteur électrique, comprenant les étapes suivantes :
A. mise à disposition de deux faisceaux de conducteurs (1) avec respectivement au moins un conducteur,
B. acheminement des faisceaux de conducteurs (1) respectivement à un dispositif de réception (2) le long d'une direction x d'un système de coordonnées cartésien,
C. formage de têtes d'enroulement (11) disposées de façon opposée, sachant que les faisceaux de conducteurs (1) avec un premier outil donnant la forme (3), avec un évidement en forme de pointe triangulaire, sont respectivement avancés vers un deuxième outil donnant la forme (4), avec une saillie en forme de pointe triangulaire, ceux-ci étant de ce fait pliés dans un plan x-z formant un élément en pointe triangulaire (111) et un saut de position (5) étant imprimé respectivement dans les deux éléments en pointe triangulaire (111) avec un sens de direction opposé dans une direction y,
D. formage de nervures (12) passant perpendiculairement à la direction x dans le plan x-z pour chaque faisceau de conducteurs (1), sachant que les nervures (12) sont pliées par la liaison des dispositifs de réception (2) avec les premiers axes (6) et le mouvement de rapprochement l'un de l'autre dans le sens contraire des premiers axes (6) avec un sens de direction opposé dans une direction z, le transfert des faisceaux de conducteurs (1) au deuxième axe (7) et l'éloignement l'un de l'autre dans le sens contraire des deuxièmes axes (7) avec un sens de direction opposé dans la direction z,
E. libération du dispositif de réception (2) des faisceaux de conducteurs (1) et transport des faisceaux de conducteurs (1) respectivement à une cadence de transport en direction x, et
F. répétition des étapes B à E jusqu'à ce qu'un voile d'enroulement (8) ait été produit avec un nombre défini d'enroulements, qui sont respectivement formés par les deux faisceaux de conducteurs et comprennent respectivement deux têtes d'enroulement (11) et quatre nervures (12).

2. Procédé selon la revendication 1, **caractérisé en ce que**
dans l'étape C, le saut de position (5) est imprimé dans les éléments en pointe triangulaire (111) pendant le pliage des faisceaux de conducteurs (1) dans le plan x-z.

3. Procédé selon la revendication 1ou 2, **caractérisé en ce qu'**
un troisième outil donnant la forme (9) est respectivement avancé vers les faisceaux de conducteurs (1) dans l'étape D et les faisceaux de conducteurs (1) sont pliés autour des troisièmes outils donnant la forme (9).

4. Procédé selon l'une quelconque des revendications précédentes, **caractérisé en ce que**
les premiers outils donnant la forme (3) et les deuxièmes outils donnant la forme (4) sont changés pendant le procédé pour varier la taille du pas (SW) des enroulements.

5. Procédé selon l'une quelconque des revendications précédentes, **caractérisé en ce que**
les enroulements sont transférés à une table d'enroulement (10), qui exécute un mouvement de nutation autour de l'axe z pendant tout le procédé pour imprimer les sauts de position (5) dans les éléments en pointe triangulaire (111) des têtes d'enroulement (11).
